# FASCICULE DE BREVET EUROPEEN

(11) **EP 1 849 962 B1**
(45) Date de publication et mention de la délivrance du brevet: **10.12.2008**
(21) Numéro de dépôt: 07106591.6
(22) Date de dépôt: 20.04.2007
(51) Int. Cl.: F01D 5/30

(54) **Système de rétention des aubes dans un rotor**
Haltungssystem von Schaufeln an einem Rotor
Retention system for blades on a rotor

(30) Priorité: 27.04.2006 FR 0651500
(43) Date de publication de la demande: 31.10.2007
(73) Titulaire: SNECMA, 75015 Paris (FR)
(72) Inventeur: Buisson, Hervé, 77176 Savigny Le Temple (FR); Goga, Jean-Luc, 77430 Champagne Sur Seine (FR); Lefebvre, Eric, 89340 Champigny (FR)
(74) Mandataire: Barbin le Bourhis, Joël

(56) Documents cités:
- EP-A- 0 286 227
- EP-A- 1 096 107
- EP-A- 1 223 309
- EP-A- 1 607 579
- GB-A- 1 255 873
- GB-A- 2 244 100
- GB-A- 2 258 273
- US-A- 3 656 865

## Description

L'invention se rapporte à un rotor, notamment un rotor de soufflante d'un turboréacteur d'avion et concerne plus particulièrement le système de rétention des aubes. Elle se rapporte également à une soufflante de turboréacteur équipée d'un tel rotor et à un turboréacteur d'avion dont la soufflante est équipée d'un tel rotor.

Dans un turboréacteur double flux, le rotor de la soufflante porte une pluralité d'aubes. Chaque aube comporte un pied d'aube nervuré engagé dans une rainure ménagée à la périphérie d'un disque, dite « alvéole ». Les alvéoles sont définies entre des protubérances radiales appelées « dents de disque » munies de bossages latéraux recouvrant les bords des alvéoles et par conséquent lesdites alvéoles sont conformées pour retenir les pieds d'aubes. Les alvéoles sont débouchantes, à l'amont comme à l'aval. Ici, les termes amont et aval sont utilisés pour désigner respectivement une position vers l'avant ou vers l'arrière du rotor, c'est-à-dire en considérant le sens d'écoulement de l'air.

Au montage, on engage chaque pied d'aube dans son alvéole en le faisant glisser par l'extrémité amont de celle-ci. Les extrémités amont sont ensuite fermées, notamment par une pièce annulaire couramment appelée "virole arrière de capot". Cette pièce est fixée au disque du rotor. Elle permet aussi de bloquer des cales longitudinales introduites dans les alvéoles, sous les pieds d'aubes.

En cas de perte d'aube, l'aube adjacente se couche grâce au pivotement autorisé par la forme de la cale et elle avance vers l'amont. Le système de rétention d'aube doit pouvoir résister à cette poussée axiale.

Le document EP 1 223 309 décrit un tel système de rétention des aubes dans lequel la tête de cale, entraînée par l'aube, se déplace vers l'amont et entre en contact avec ladite virole arrière de capot. Celle-ci doit donc être dimensionnée pour absorber un effort important. La cale qui a aussi une fonction de transmission d'efforts doit être un élément métallique suffisamment robuste pour jouer ce rôle. Par conséquent, ladite virole arrière de capot comme les cales insérées dans les différentes alvéoles, sont des pièces métalliques relativement lourdes.

L'invention a principalement pour but de réduire la masse du rotor, notamment du système de verrouillage amont.

A cet effet, l'invention concerne principalement un rotor comportant un disque muni d'alvéoles à sa périphérie externe, des aubes rattachées audit disque, chaque aube comportant un pied d'aube engagé et retenu dans une telle alvéole et un flasque de rétention axiale annulaire, fixé à l'amont dudit disque en regard d'extrémités débouchantes desdites alvéoles, caractérisé en ce que ledit disque et ledit flasque sont conformés pour définir un crabotage circonférentiel extérieur s'étendant radialement à l'extérieur desdites extrémités débouchantes et un crabotage circonférentiel intérieur s'étendant radialement à l'intérieur desdites extrémités débouchantes.

L'invention s'applique notamment à un rotor de soufflante de turboréacteur.

Ainsi, le flasque dévolu exclusivement au verrouillage amont est sensiblement moins lourd que la virole arrière de capot antérieure utilisée à cet effet.

De plus, la cale ne participe plus à la transmission d'efforts vers l'amont ; elle peut donc être allégée. Elle peut notamment être en matériau composite. Une telle cale, élastiquement déformable, insérée entre chaque pied d'aube et le fond de l'alvéole correspondante n'a plus pour fonction que de solliciter l'aube vers l'extérieur pour maintenir les pieds d'aube en contact avec les bossages latéraux recouvrant les bords des alvéoles.

L'invention sera mieux comprise et d'autres avantages de celle-ci apparaîtront plus clairement à la lumière de la description qui va suivre, donnée uniquement à titre d'exemple et faite en référence aux dessins annexés, dans lesquels :
- la figure 1 est une vue partielle en perspective d'un disque de rotor de soufflante conforme à l'invention ;
- la figure 2 est une vue partielle en perspective illustrant le flasque de rétention axial destiné à être fixé au disque, à l'amont ;
- la figure 3 est une vue partielle en perspective du rotor, sur laquelle on n'a représenté qu'une seule aube de soufflante, pour plus de clarté ;
- la figure 4 est une vue de détail illustrant en perspective une cale élastiquement déformable ;
- la figure 5 est une vue schématique en coupe radiale du rotor, illustrant le montage ;
- la figure 6 est une vue analogue à la figure 5 illustrant le comportant du flasque de rétention d'aube, en cas de perte d'aube.

Le rotor de soufflante pour turboréacteur tel que représenté comporte un disque 11 et une pluralité d'aubes 14 rattachées à ce disque. A cet effet, le disque est muni d'alvéoles 16 à sa périphérie externe. Ces alvéoles 16 sont définies entre des dents de disque 18 munies de bossages latéraux 19 recouvrant les bords desdites alvéoles 16. Par ailleurs, chaque aube 14 comporte un pied d'aubes 20 conformé pour pouvoir s'engager dans une alvéole 16 correspondante. La forme des alvéole 16 est déterminée pour retenir les pieds d'aubes. Une cale longitudinale 22 est insérée entre le fond de chaque alvéole 16 et le pied d'aube 20 correspondant, pour stabiliser la position de l'aube, radialement. Les alvéoles 16 ont des extrémités 16a débouchantes, à l'amont, comme représenté. Un flasque de rétention axial 26, annulaire, est fixé à l'amont du disque, en regard des extrémités débouchantes 16a de ces alvéoles. Par conséquent, ce flasque annulaire est de nature à empêcher une aube de sortir de son alvéole vers l'amont lorsqu'elle est soumise à un effort la sollicitant dans ce sens. C'est notamment ce qu'il se produit lors d'une perte d'aube. Dans ce cas, l'aube adjacente se couche en pivotant sur la cale 22 et se déplace vers l'amont. Le pied d'aube entre en contact avec le flasque de rétention axiale 26 qui doit pouvoir contenir cet effort.

A cet effet, le disque 12 et le flasque 26 sont conformés pour définir un double crabotage. On distingue un crabotage circonférentiel extérieur 30 s'étendant radialement à l'extérieur desdites extrémités débouchantes 16a des alvéoles et un crabotage circonférentiel intérieur 32 s'étendant radialement à l'intérieur desdites extrémités débouchantes.

On entend par crabotage circonférentiel tout agencement entre deux pièces annulaires comprenant deux séries de dents appartenant respectivement à ces deux pièces. Les deux pièces se verrouillent l'une à l'autre par un engagement axial suivi d'une rotation ayant pour effet de placer les dents des deux séries en regard les unes des autres et donc de coopérer en cas de sollicitation axiale sur l'une des pièces.

Dans l'exemple décrit, le disque 11 comporte, entre les alvéoles des dents 34 dudit crabotage circonférentiel extérieur qui sont dans le prolongement amont des dents de disque 18 définies ci-dessus. Ces dents 34 font donc saillie vers l'amont extérieurement radial par rapport auxdites extrémités débouchantes 16a des alvéoles 16. Des gorges 36 sont creusées dans ces dents 34 et ouvrent sur les faces internes de celles-ci.

Par ailleurs, le disque 11 comporte aussi une bride annulaire 40 faisant saillie vers l'amont, radialement intérieurement par rapport auxdites extrémités débouchantes 16a des alvéoles 16. Cette bride annulaire se détache du disque en définissant une gorge annulaire 42. Elle est crénelée pour définir des dents réparties circonférentiellement. Ces dents font partie dudit crabotage circonférentiel intérieur 32.

Le flasque de rétention 26 comporte quant à lui deux séries de dents 48, 50 réparties circonférentiellement, respectivement à la périphérie extérieure et à la périphérie intérieure d'un voile annulaire 46. Ce voile, lorsque le flasque de rétention 26 est fixé au disque se trouve placé en regard desdites extrémités débouchantes 16a des alvéoles 16. Les dents 48 font partie du crabotage circonférentiel extérieur et les dents 50 font partie du crabotage circonférentiel intérieur.

Par ailleurs, le flasque de rétention 26 comporte une bride amont 54 s'étendant radialement vers l'intérieur. En position de montage, cette bride est accolée à la bride annulaire 40 du disque. Les deux brides sont assemblées par des boulons.

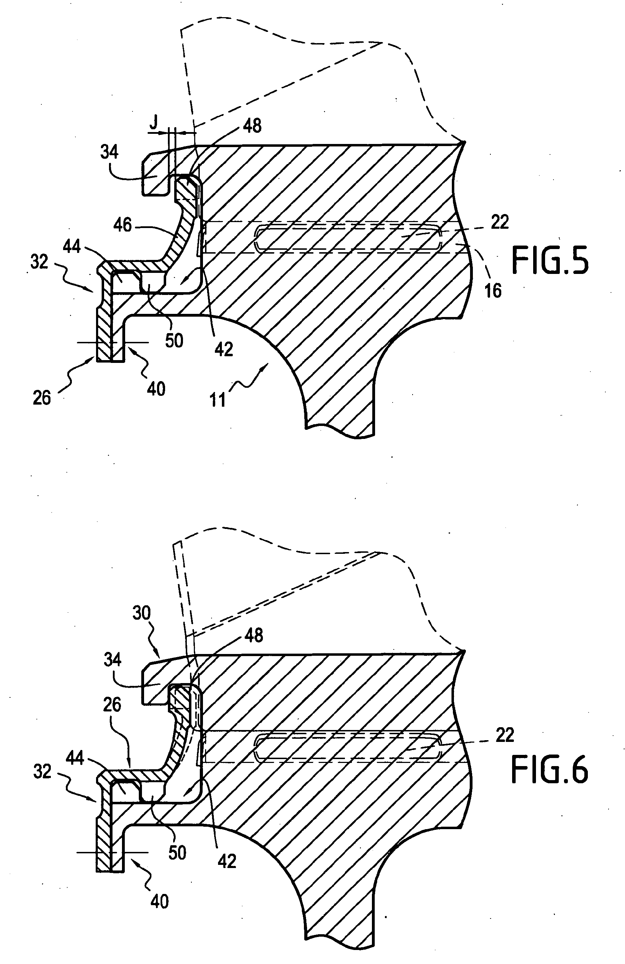

Comme représenté sur les figures 5 et 6, le voile annulaire 46 est déformable et un jeu axial J est défini au montage entre des dents coopérantes 34, 48 d'un crabotage, plus particulièrement ici le crabotage extérieur. Ceci permet au voile de se déformer avant que lesdites dents du crabotage extérieur entrent en contact. C'est donc le voile seul qui commence à absorber l'énergie du choc provoqué par le déplacement d'un pied d'aube. Cet amortissement réduit le choc lors de la reprise des efforts par le double crabotage.

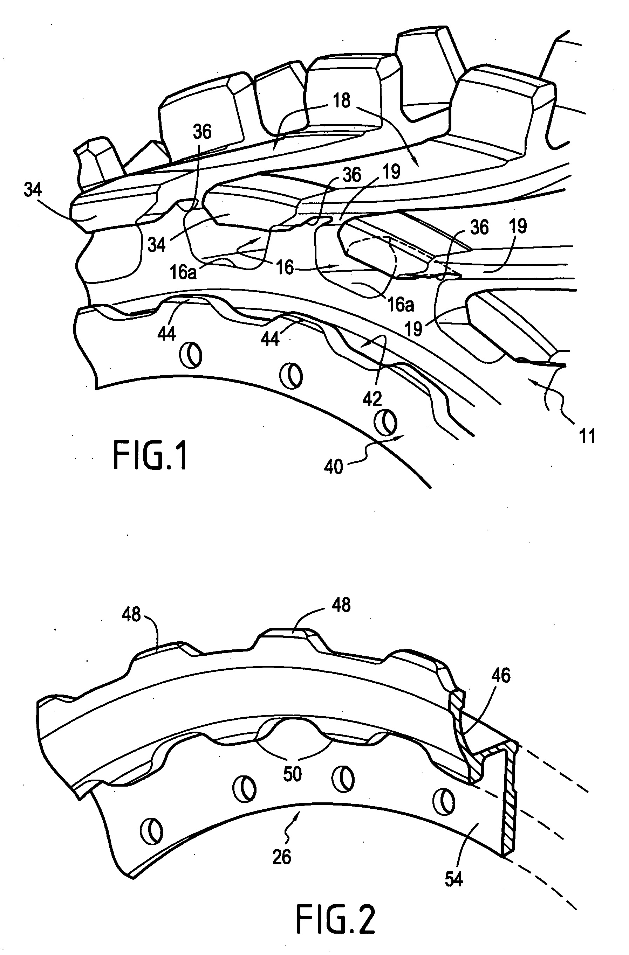

De plus, les dents coopérantes 34, 48 - 44, 50 des crabotages extérieur et intérieur sont décalées circonférentiellement d'un angle correspondant à la moitié de l'angle au centre entre deux alvéoles adjacentes. Par conséquent, comme on le voit sur la figure 2, les dents 48, 50 du flasque sont décalées angulairement. Il en est de même des dents 34, 44 définies sur le disque. Pour chaque alvéole 16, les efforts au niveau du double crabotage sont repris par un triangle dit "triangle de rétention", défini entre deux zones d'appui extérieures et une zone d'appui intérieure.

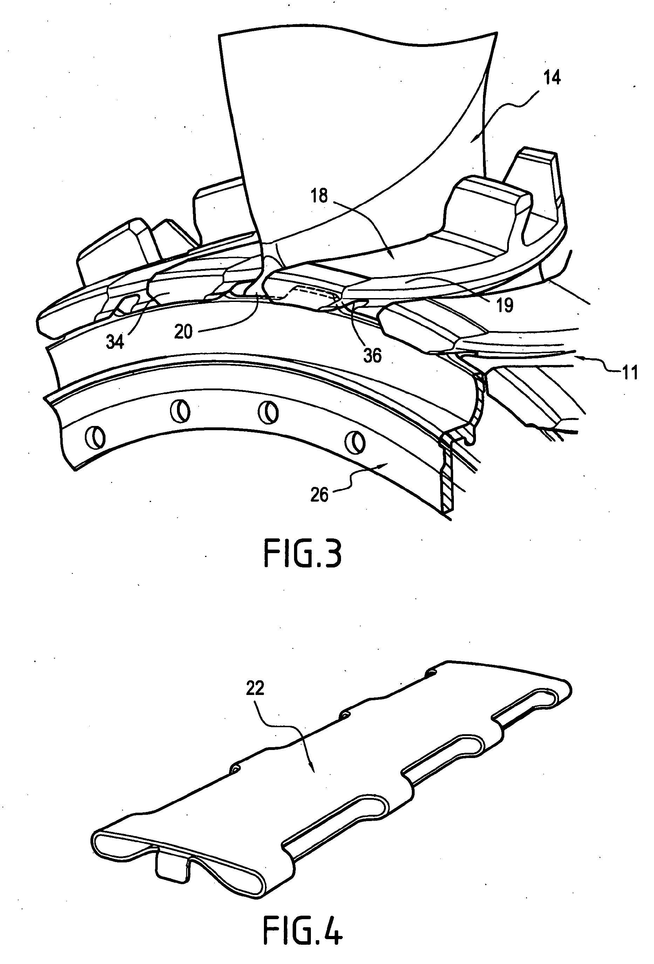

La cale 22 élastiquement déformable telle que représentée sur la figure 4 peut avantageusement être réalisée en matériau composite. Même si elle est en métal, son poids reste faible puisqu'elle n'a plus à être conçue pour transférer l'effort du pied d'aube vers les moyens de rétention axiale.

Il est à noter que l'usinage des gorges 36 est une opération de tournage simple, peu coûteuse, réalisée avant la formation des alvéoles du disque.

Le profil du flasque de rétention entre les deux séries de dents est optimisé pour absorber l'énergie de choc provoquée par le déplacement d'un pied d'aube.

Au montage, les aubes de soufflante 14 sont mises en place dans leurs alvéoles respectives et les cales 22 sont positionnées sous les pieds d'aubes. Le flasque 26 est présenté de façon que les dents 48, 50 puissent s'engager dans les espaces séparant les dents 34, 44 du disque. Lorsque les dents 48, 50 du flasque se trouvent respectivement en regard des gorges 36 et de la gorge intérieure 42, l'opérateur le fait tourner et procède à sa fixation sur la bride.

En fonctionnement normal, les efforts aérodynamiques poussent axialement les aubes de soufflante vers l'amont. Les pieds d'aubes viennent donc en appui sur le flasque de rétention. Si une aube subit une poussée axiale brutale vers l'amont (cas de l'aube adjacente, comme indiqué ci-dessus), le flasque 26, bloqué sur son crabotage intérieur se déforme pour amortir le choc de l'effort. A la fin de cette déformation, le flasque prend appui sur les faces internes des dents 34 du disque appartenant au crabotage extérieur. L'énergie de la rétention est alors dispersée à travers le "triangle de rétention" décrit ci-dessus.

Le jeu défini dans le crabotage supérieur facilite la déformation du flasque de rétention.

## Revendications

1. Rotor comportant un disque (11) muni d'alvéoles (16) à sa périphérie externe, des aubes (14) rattachées audit disque, chaque aube comportant un pied d'aube (20) engagé et retenu dans une telle alvéole et un flasque de rétention axiale (26), annulaire, fixé à l'amont dudit disque en regard d'extrémités débouchantes (16a) desdites alvéoles, **caractérisé en ce que** ledit disque et ledit flasque sont conformés pour définir un crabotage circonférentiel extérieur (34, 48) s'étendant radialement à l'extérieur desdites extrémités débouchantes (16a) et un crabotage circonférentiel (44, 50) intérieur s'étendant radialement à l'intérieur desdites extrémités débouchantes.

2. Rotor de soufflante selon la revendication 1, **caractérisé en ce que** ledit disque comporte, entre lesdites alvéoles, des dents (34) dudit crabotage circonférentiel extérieur, faisant saillie vers l'amont, extérieurement par rapport auxdites extrémités débouchantes et **en ce que** des gorges (36) sont creusées dans lesdites dents et ouvrent sur les faces internes de celles-ci.

3. Rotor selon la revendication 1 ou 2, **caractérisé en ce que** ledit disque comporte une bride annulaire (40) faisant saillie vers l'amont, intérieurement par rapport auxdites extrémités débouchantes et crénelée pour définir des dents (44) réparties circonférentiellement, faisant partie dudit crabotage circonférentiel intérieur.

4. Rotor selon la revendication 3, **caractérisé en ce que** ledit flasque de rétention (44) comporte une bride amont (54) s'étendant radialement vers l'intérieur, accolée à ladite bride annulaire dudit disque et fixée à celle-ci.

5. Rotor selon l'une des revendications précédentes, **caractérisé en ce que** ledit flasque de rétention comporte deux séries de dents (48, 50) réparties circonférentiellement, respectivement à la périphérie extérieure et à la périphérie intérieure d'un voile annulaire (46) placé en regard desdits extrémités débouchantes des alvéoles, les deux séries de dents faisant respectivement partie dudit crabotage circonférentiel extérieur et dudit crabotage circonférentiel intérieur.

6. Rotor selon la revendication 5, **caractérisé en ce que** ledit voile annulaire (46) est déformable et **en ce qu'**un jeu axial (J) est défini au montage entre des dents coopérantes (34, 48) d'un crabotage précité, pour permettre audit voile de se déformer avant que lesdites dents coopérantes entrent en contact.

7. Rotor selon la revendication 6, **caractérisé en ce que** ledit jeu axial (J) est défini entre les dents coopérantes dudit crabotage extérieur.

8. Rotor selon l'une des revendications 5 à 7, **caractérisé en ce que** les dents coopérantes desdits crabotages extérieur et intérieur sont décalées circonférentiellement.

9. Rotor selon l'une des revendications précédentes, **caractérisé en ce qu'**une cale (22) élastiquement déformable est insérée entre chaque pied d'aube et le fond de l'alvéole correspondante.

10. Soufflante de turboréacteur pour avion, **caractérisée en ce qu'**elle comprend un rotor selon l'une des revendications précédentes.

11. Turboréacteur pour avion, **caractérisé en ce qu'**il comprend une soufflante ayant un rotor selon l'une des revendications 1 à 9.

## Claims

1. A rotor comprising a disk (11) provided with slots (16) in its outer periphery, blades (14) attached to said disk, each blade having a blade root (20) engaged and retained in such a slot, and an annular axial retention plate (26) fastened to the upstream side of said disk in register with open ends (16a) of said slots, the rotor being **characterized in that** said disk and said plate are shaped to define an outer circumferential interlock (34, 48) extending radially outside said open ends (16a), and an inner circumferential interlock (44, 50) extending radially inside said open ends.

2. A fan rotor according to claim 1, **characterized in that** said disk includes, between said slots, teeth (34) of said outer circumferential interlock that project upstream externally relative to said open ends, and **in that** grooves (36) are formed in said teeth, which grooves are open in the inside faces of the teeth.

3. A rotor according to claim 1 or claim 2, **characterized in that** said disk includes an annular flange (40) projecting upstream internally relative to said open ends, and crenellated in order to define circumferentially distributed teeth (44) forming part of said inner circumferential interlock.

4. A rotor according to claim 3, **characterized in that** said retention plate (26) includes an upstream flange (54) extending radially outwards, adjacent to said annular flange of said disk and fastened thereto.

5. A rotor according to any preceding claim, **characterized in that** said retention plate has two series of teeth (48, 50) that are circumferentially distributed, respectively at the outer periphery and at the inner periphery of an annular web (46) placed facing said open ends of said slots, the two series of teeth respectively forming part of said outer circumferential interlock and part of said inner circumferential interlock.

6. A rotor according to claim 5, **characterized in that** said annular web (46) is deformable, and **in that** axial clearance (J) is defined on assembly between the co-operating teeth (34, 48) of an above-specified interlock, to enable said web to deform before said co-operating teeth come into contact.

7. A rotor according to claim 6, **characterized in that** said axial clearance (J) is defined between the co-operating teeth of said outer interlock.

8. A rotor according to any one of claims 5 to 7, **characterized in that** the co-operating teeth of said outer and inner interlocks are circumferentially offset.

9. A rotor according to any preceding claim, **characterized in that** an elastically-deformable spacer (22) is inserted between each blade root and the bottom of the corresponding slot.

10. An airplane turbojet fan, **characterized in that** it comprises a rotor according to any preceding claim.

11. An airplane turbojet, **characterized in that** it includes a fan having a rotor according to any one of claims 1 to 9.

## Patentansprüche

1. Rotor umfassend eine Scheibe (11), die an ihrem Außenumfang mit Waben (16) versehen ist, Schaufeln (14), die an die Scheibe angesetzt sind, wobei jede Schaufel einen Schaufelfuß (20) aufweist, der in eine solche Wabe eingreift und in dieser gehalten ist, sowie einen ringförmigen Flansch zum axialen Halten (26), der stromaufwärts der Scheibe gegenüber offenen Enden (16a) der Waben befestigt ist, **dadurch gekennzeichnet, daß** die Scheibe und der Flansch ausgebildet sind, um eine umfangseitige äußere Klauenkupplung (34, 48), die sich radial außerhalb der offenen Enden (16a) erstreckt, sowie eine umfangseitige innere Klauenkupplung (44, 50), die sich radial innerhalb der offenen Enden erstreckt, zu definieren.

2. Gebläserotor nach Anspruch 1, **dadurch gekennzeichnet, daß** die Scheibe zwischen den Waben Zähne (34) der umfangseitigen äußeren Klauenkupplung aufweist, die in stromaufwärtiger Richtung, bezogen auf die offenen Enden außen vorspringen, und daß Auskehlungen (36) in den Zähnen ausgebildet sind und auf ihre Innenseiten hinausführen.

3. Rotor nach Anspruch 1 oder 2, **dadurch gekennzeichnet, daß** die Scheibe einen Ringflansch (40) aufweist, der in stromaufwärtiger Richtung, bezogen auf die offenen Enden innen vorspringt und gezahnt ist, um in Umfangsrichtung verteilte Zähne (44) zu definieren, die Teil der umfangseitigen inneren Klauenkupplung sind.

4. Rotor nach Anspruch 3, **dadurch gekennzeichnet, daß** der Halteflansch (26) einen stromaufwärtigen Flansch (54) umfaßt, der sich radial nach innen erstreckt, an den Ringflansch der Scheibe angesetzt und an diesem befestigt ist.

5. Rotor nach einem der vorhergehenden Ansprüche, **dadurch gekennzeichnet, daß** der Halteflansch zwei Reihen von Zähnen (48, 50) aufweist, die am Außenumfang bzw. am Innenumfang einer gegenüber den offenen Enden der Waben angeordneten ringförmigen Abdeckung (46) in Umfangsrichtung verteilt sind, wobei die beiden Zahnreihen zu der umfangseitigen äußeren Klauenkupplung bzw. zu der umfangseitigen inneren Klauenkupplung gehören.

6. Rotor nach Anspruch 5, **dadurch gekennzeichnet, daß** die ringförmige Abdeckung (46) verformbar ist und daß bei der Montage ein axiales Spiel (J) zwischen zusammenwirkenden Zähnen (34, 48) einer vorgenannten Klauenkupplung definiert wird, um der Abdeckung zu ermöglichen, sich zu verformen, bevor die zusammenwirkenden Zähne in Kontakt gelangen.

7. Rotor nach Anspruch 6, **dadurch gekennzeichnet, daß** das axiale Spiel (J) zwischen den zusammenwirkenden Zähnen der äußeren Klauenkupplung definiert ist.

8. Rotor nach einem der Ansprüche 5 bis 7, **dadurch gekennzeichnet, daß** die zusammenwirkenden Zähne der äußeren und der inneren Klauenkupplung in Umfangsrichtung versetzt sind.

9. Rotor nach einem der vorhergehenden Ansprüche, **dadurch gekennzeichnet, daß** ein elastisch verformbarer Keil (22) zwischen jedem Schaufelfuß und dem Boden der entsprechenden Wabe eingesetzt ist.

10. Gebläse eines Turbostrahltriebwerks für Flugzeuge, **dadurch gekennzeichnet, daß** es einen Rotor nach einem der vorhergehenden Ansprüche umfaßt.

11. Turbostrahltriebwerk für Flugzeuge, **dadurch gekennzeichnet, daß** es ein Gebläse umfaßt, das einen Rotor nach einem der Ansprüche 1 bis 9 aufweist.
